# EUROPÄISCHE PATENTSCHRIFT

(11) **EP 0 745 522 B1**
(45) Veröffentlichungstag und Bekanntmachung des Hinweises auf die Patenterteilung: **09.09.1998**
(21) Anmeldenummer: 96108292.2
(22) Anmeldetag: 24.05.1996
(51) Int. Cl.: B60R 25/04

(54) **Diebstahlsicherung für Fahrzeuge**
Anti theft device for vehicles
Dispositif antivol pour véhicule

(30) Priorität: 30.05.1995 DE 19519681; 06.03.1996 DE 19608694
(43) Veröffentlichungstag der Anmeldung: 04.12.1996
(73) Patentinhaber: Hahn, G. Uwe, 23562 Lübeck (DE); Büttner, Manfred, 23562 Lübeck (DE); Brockmann, Stefan, 23562 Lübeck (DE)
(72) Erfinder: Hahn, G. Uwe, 23562 Lübeck (DE); Büttner, Manfred, 23562 Lübeck (DE); Brockmann, Stefan, 23562 Lübeck (DE)
(74) Vertreter: Jaeschke, Rainer, Dipl.-Ing.

(56) Entgegenhaltungen:
- EP-A- 0 618 113
- WO-A-94/25936
- WO-A-95/13943
- DE-A- 3 524 546
- GB-A- 2 217 081
- GB-A- 2 218 243
- GB-A- 2 226 593
- GB-A- 2 253 930
- GB-A- 2 272 787
- GB-A- 2 284 017
- US-A- 5 276 728
- US-A- 5 370 201

## Beschreibung

Die Erfindung betrifft eine Vorrichtung zum Stillegen eines unrechtmäßig benutzten Kraftfahrzeuges, insbesondere eines Personenkraftwagens, mit einem Funkempfänger zum Empfangen eines externen, ihm zugeordneten überregionalen und kodierten Funksignals, das von einem im wesentlichen flächendeckenden überregionalen Funksignalübertragungsnetz nach Feststellung der unberechtigten Benutzung durch den rechtmäßigen Eigentümer aussendbar ist, und zum Erzeugen eines Empfangssignals, sowie mit wenigstens einem Steuerschaltkreis zum Erzeugen wenigstens eines Steuersignals für wenigstens ein Schaltmittel, das wenigstens einen Stromkreis aufgrund des Empfangssignals bzw. des Steuersignals unterbricht, der für die Fortbewegung des Kraftfahrzeuges erforderlich ist.

Im Zuge der sich immer weiter entwickelnden Kriminalität besteht heutzutage ein Problem darin, daß immer mehr Kraftfahrzeuge, insbesondere Personenkraftwagen, gestohlen werden. Es sind daher Vorrichtungen bekannt und seitens der Versicherungen teilweise auch vorgeschrieben, die ein unbefugtes Entwenden des Kraftfahrzeuges zumindest erschweren sollen. Eine Art derartiger Vorrichtungen stellen die sogenannten elektronischen Wegfahrsperren dar, die ein Starten des Kraftfahrzeuges ohne den entsprechenden elektronischen Schlüssel verhindern.

Es sind weiterhin beispielsweise aus der DE 43 35 641 A1 und der US 5,370,201 Vorrichtungen bekannt, die einen Funkempfänger aufweisen, der durch ein flächendeckend ausgestrahltes, codiertes Funksignal aktiviert werden kann, um ein Empfangssignal zu erzeugen, mit dem der Antriebsmechanismus des betreffenden Kraftfahrzeuges stillgelegt werden kann. Da nur autorisierte Personen die Aussendung des codierten Funksignals veranlassen können, ist ein Mißbrauch weitestgehend ausgeschlossen.

In der EP-A-0 449 471 wird eine Vorrichtung beschrieben, mit der ein herkömmliches Mobilfunktelefon mit einem fahrzeugseitigen Sicherungssystem kombiniert werden kann. Es ist eine Datenbibliothek vorgesehen, um empfangene Funksignale des Mobilfunktelefons auf das Sicherungssytem zu übertragen. Hiermit kann ebenfalls eine Stillegung des Kraftfahrzeuges aus der Ferne erfolgen, wobei ein Geschwindigkeitsfühler vorgesehen ist, um eine Stillegung nur bei geringer Geschwindigkeit zu ermöglichen. Diese Vorrichtung hat den Nachteil, daß stets ein empfangsbereites Mobilfunktelefon vorhanden sein muß, um eine Stillegung zu ermöglichen. Ferner birgt eine Stillegung auch bei geringer Geschwindigkeit ein erhöhtes Unfallrisiko.

Schließlich ist aus der WO 95/13944 ein Sicherungssystem bekannt, mit dem der Ort des Fahrzeuges über Satellit ermittelt werden kann. Von einer zentralen Kontrollstation kann die Legitimation des Fahrers abgefragt und ggf. eine Stillegung des Fahrzeuges bewirkt werden.

Allen bekannten Vorrichtungen ist gemeinsam, daß sie relativ aufwendig aufgebaut sind. In der Regel werden bidirektionale Funkverbindungen benötigt, um die Stillegung des Fahrzeuges zu bewirken. Insbesondere besteht ein Nachteil darin, daß eine Stillegung auch in gefahrenträchtigen Situationen erfolgen kann, wodurch sich das Unfallrisiko erhöht.

Der Erfindung liegt die Aufgabe zugrunde, ein derartiges Sicherungssystem so zu verbessern, daß eine Stillegung aus der Ferne auch mit größtmöglicher Sicherheit für den Fahrer und für den Verkehr erfolgen kann.

Die Aufgabe wird gemäß der Erfindung durch ein Sicherungssystem der eingangs geschilderten Art gelöst, bei welchem der Funkempfänger in einer ersten Baueinheit und welcher Steuerschaltkreis und/oder welches Schaltmittel in wenigstens einer zweiten Baueinheit angeordnet sind, die an jeweils für sich optimierten Stellen räumlich voneinander getrennt in dem Fahrzeug eingebaut sind, wobei wenigstens ein Kontrollschaltkreis vorgesehen ist, der mit wenigstens einem den Stillstand des Kraftfahrzeuges feststellenden Meßfühler verbunden ist, um ein Unterbrechen eines für die Fortbewegung des Kraftfahrzeuges erforderlichen Stromkreises nur bei Stillstand des Kraftfahrzeuges zu bewirken. Eine Unterbrechung des Stromkreises findet demnach nur dann statt, wenn der Funkempfänger das entsprechende Signal empfangen hat und der Kontrollschaltkreis den Stillstand des Kraftfahrzeuges feststellt. Die Verknüpfung des Steuersignals und des Signals des Kontrollschaltkreises kann in einfacher Weise durch ein UND-Gatter erfolgen. Dadurch wird in vorteilhafter Weise gewährleistet, daß ein Stillsetzen des Kraftfahrzeuges nicht bei hoher Geschwindigkeit erfolgt, was gegebenenfalls zu Unfällen führen würde. Die Stillsetzung nur beim Stillstand des Fahrzeuges hat den Vorteil, daß ein Unfallrisiko durch das Anhalten des Motors weitestgehend vermieden wird, da die Schaltmittel erst bei stehendem Wagen die entsprechenden Stromkreise unterbrechen.

Grundsätzlich ist es möglich, daß der Funkempfänger und der Steuerschaltkreis über eine Signalleitung miteinander verbunden sind. Diese Signalleitung könnte innerhalb eines ohnehin vorhanden Kabelbaums geführt werden, so daß es für den unberechtigen Benutzer nur sehr schwer möglich ist, die entsprechende Signalleitung zu finden und zu unterbrechen. Auch kann vorgesehen werden, daß das Empfangsignal auf eine bestehende Leitung eines Stromkreis aufgeschaltet wird. Sofern dieser Stromkreis eine für die Fortbewegung des Kraftfahrzeuges erforderliche Betriebseinheit betrifft, würde ein Unterbrechen dieser Leitung auch gleichzeitg eine Unterbrechung dieser Betriebseinheit zur Folge haben, woduch das Fahrzeug stillgesetzt werden würde.

Besonders vorteilhaft ist es, wenn der Funkempfänger mit einem Sendermodul in Verbindung steht, das in der ersten Baueinheit angeordnet ist und das wenigstens einen internen drahtlos übertragbaren Sendeimpuls in Abhängigkeit von dem Empfang des externen Funksignals und des daraus resultierenden Empfangssignals erzeugt, und daß in der wenigstens zweiten Baueinheit ein Empfängermodul angeordnet ist, um den interen Sendeimpuls drahtlos zu empfangen. Dies hat den Vorteil, daß zwischen der ersten und der zweiten bzw. den zweiten Baueinheiten überhaupt keine Verbindung mehr erkennbar ist. Ein Unterbrechen der Signalverbindung, um die Stillegung oder das Auslösen des Alarms zu umgehen, ist somit nicht mehr möglich. Weiterhin wird auch der nachträgliche Einbau der Vorrichtung erleichtert, da keine Signalleitungen durch das Fahrzeug verlegt werden müssen.

Zweckmäßig kann es hierbei sein, wenn die Schaltmittel zum Unterbrechen eines für die Fortbewegung des Kraftfahrzeuges erforderlichen Stromkreises eine Schmelzsicherung in dem zu unterbrechenden Stromkreis und einen Kurzschlußschalter aufweisen, der durch das Steuersignal aktiviert wird, so daß die Schmelzsicherung durchbrennt. Dies hat den Vorteil, daß der Stromkreis zunächst irreversibel unterbrochen ist, so daß eine Weiterfahrt nur nach dem Ersetzen der Schmelzsicherung möglich ist. Die Schmelzsicherung kann dabei anders als übliche Schmelzsicherungen ausgebildet und beispielsweise nur in Werkstätten erhältlich sein. Dies hat den Vorteil, daß ein Ersetzen dieser Schmelzsicherung nicht ohne weiteres möglich ist. Insbesondere würde der unbefugte Dritte beim Kauf dieser speziellen Schmelzsicherung auffallen.

In einer weiteren Ausführungsform der erfindungsgemäßen Vorrichtung ist vorgesehen, daß wenigstens ein Zeitgeberschaltkreis vorhanden ist, um ein Unterbrechen eines für die Fortbewegung des Kraftfahrzeuges erforderlichen Stromkreises erst nach Ablauf einer bestimmten Zeitspanne zu bewirken. Zweckmäßig kann es hierbei sein, wenn das Schaltmittel wenigstens eine im Kraftfahrzeuginnenraum vorgesehene Signaleinrichtung schaltet. Durch diese einfache Methode wird zum einen das Kraftfahrzeug als gestohlen und durch die erfindungsgemäße Vorrichtung als erfaßt kenntlich gemacht und zum anderen dem unbefugten Benutzer ermöglicht, das Kraftfahrzeug anzuhalten und abzustellen. Die Zeitspanne bis zum Unterbrechen des für die Fortbewegung erforderlichen Stromkreises kann beispielsweise 0,5 bis 5 Minuten betragen.

Gemäß der Erfindung ist weiterhin vorgesehen, daß zumindest der Funkempfänger und/oder der Steuerschaltkreis und/oder der Speicherschaltkreis und/oder das Sendermodul und/oder das Empfängermodul eine vom Bordnetz des Kraftfahrzeuges unabhängige Stromversorgung aufweist. Die entsprechenden Stromversorgungen können einen durch eine Solarzelle gepufferten Akkumulator aufweisen. Zweckmäßig kann es aber auch sein, wenn die entsprechenden Stromversorgungen wenigstens einen Akkumulator aufweisen, der über das Bordnetz gepuffert wird. Dies hat den Vorteil, daß das Kraftfahrzeug auch dann gesichert werden kann, wenn beispielsweise die Batterie abgeklemmt worden ist. Unmittelbar nach dem Anklemmen der Batterie ziehen die Schaltmittel an und aktivieren die entsprechenden Alarmsignale und unterbrechen die entsprechenden Stromkreise.

In einer weitergehenden Ausführungsform ist vorgesehen, daß wenigstens ein Speichermittel vorhanden ist, das das Empfangssignal und/oder das Steuersignal zumindest solange speichert, bis die Schaltmittel aktiviert worden sind. Das Speichermittel kann als bistabiles Relais ausgebildet sein. Dies hat den Vorteil, daß, insbesondere bei einer unabhängigen Stromversorgung der Vorrichtung, diese aktiviert werden kann und aktiviert bleibt, auch wenn die Batterie des Kraftfahrzeuges abgeklemmt worden ist oder das Funksignal unterbrochen worden ist. Das Auslösen der Alarmsignale und/oder das Unterbrechen eines für die Fortbewegung erforderlichen Stromkreises erfolgt dann unmittelbar nach dem Anklemmen der Fahrzeugbatterie.

In einer weitergehenden Ausführungsform ist vorgesehen, daß die Schaltmittel bistabil ausgebildet sind, so daß ein aktivierter Schaltungszustand auch nach einem Spannungsabfall und/oder einer Unterbrechung der Energieversorgung aufrechterhalten bleibt. Dies hat den Vorteil, daß die Vorrichtung zum Sichern des Kraftfahrzeuges nicht in einfacher Weise durch Abklemmen der Stromversorgung ausgeschaltet und/oder die Schaltmittel zurückgesetzt werden können.

Gemäß einer vorteilhaften Ausführungsform ist vorgesehen, daß wenigstens ein Rücksetzungsmittel vorhanden ist, um die Schaltmittel zurückzusetzen. Hierbei kann es zweckmäßig sein, wenn das Rücksetzungsmittel einen Mikroschalter aufweist. Der Mikroschalter kann beispielsweise an einer versteckten Stelle des Kraftfahrzeuges untergebracht sein, die nur dem rechtmäßigen Eigentümer bekannt ist. Besonders zweckmäßig ist es jedoch, wenn das Rücksetzungsmittel einen Schlüsselschalter oder ein Codeschloß-Schalter aufweist. Dies hat den Vorteil, daß nur der rechtmäßige Eigentümer die Schaltmittel zurücksetzen und das Kraftfahrzeug wieder in Gang setzen kann.

In einer weitergehenden Ausführungsform der Erfindung ist vorgesehen, daß wenigstens ein Sendeschaltkreis vorhanden ist, der mit dem Funkempfänger und/oder dem Steuerschaltkreis in Verbindung steht und der nach Empfang des Funksignals ein Signal aussendet. Dies hat den Vorteil, daß nicht nur das Kraftfahrzeug gesichert wird, sondern über das Signal auch geortet werden kann. Auch hierbei werden die vorhandenen Mittel zur flächendeckenden kabellosen Telekommunikation ausgenutzt, da das Signal nur von einer Empfangsstation empfangen wird, die einem bestimmten geographischen Bereich zugeordnet ist, so daß sich die Suche nach dem Kraftfahrzeug auf diesen Bereich beschränken kann.

Die Sicherstellung eines entwendeten Kraftfahrzeuges mit der Vorrichtung gemäß der Erfindung kann beispielsweise in der Weise erfolgen, daß der rechtmäßige Eigentümer nach der Feststellung des Diebstahls mit einem Telefon die erforderliche Rufnummer wählt, durch die ein Funksignal ausgelöst werden kann, das von dem Funkempfänger empfangen werden kann.

Die Vorrichtung nutzt dazu die sich immer weiter verbreitenden Telekommunikationsmittel aus, die eine im wesentliche flächendeckende kabellose Signalübertragung ermöglichen. Der Funkempfänger entspricht dabei beispielsweise dem Empfangsmittel eines Mobiltelefons oder eines Signalgebers, der ein Funksignal empfängt und den Inhaber auf einen Anruf aufmerksam macht. Einem derartigen Empfänger ist ein bestimmter Code, eine bestimmte Telefonnummer, die gewählt werden muß, oder dergleichen zugeordnet, so daß ein Auslösen des Empfängers oder ein Aufbau der Funkverbindung nur unter bestimmten Voraussetzungen möglich ist. Insbesondere bedeutet dies, daß das Funksignal kodiert ist und nur von einem bestimmten Empfänger empfangen werden kann. Diese Art der Signalübermittlung nutzt die Erfindung insofern aus, als daß der Funkempfänger nach Empfang des ihm zugeordneten und im allgemeinen kodierten Signals einen Steuerschaltkreis aktiviert, der ein Steuersignal erzeugt, über welches wenigstens ein Sicherungsmittel des Kraftfahrzeuges ausgelöst werden kann.

Das der Rufnummer zugrundeliegende Eunksignal wird dann, ggf. nach einer Identifizierung des rechtmäßigen Eigentümers durch ein Codewort oder dergleichen, von den Sendeanlagen ausgestrahlt, die das betreffende Gebiet im wesentlichen vollständig abdecken können. Der Funkempfänger empfängt das Signal, woraufhin ein Empfangssignal erzeugt wird, das dem Steuerschaltkreis unmittelbar oder über einen internen drahtlos übermittelbaren Sendeimpuls eingegeben wird. Je nach Ausführungsform wird dann unmittelbar das Signalhorn und/oder die Warnblinkanlage aktiviert und das Kraftfahrzeug somit kenntlich gemacht. Ferner werden durch die entsprechenden Schaltmittel wesentliche Stromkreise unterbrochen, so daß das Kraftfahrzeug zum Stehen kommt. Dabei ist vorgesehen, daß das Empfangssignal oder das Steuersignal durch ein Speichermittel solange gespeichert wird, bis der Kontrollschaltkreis den Stillstand des Kraftfahrzeuges feststellt, um dann das Kraftfahrzeug stillzulegen. Das Kraftfahrzeug ist somit zum einen als gestohlen kenntlich gemacht und kann zum anderen nicht mehr weiterbewegt werden, so daß ein Auffinden des Kraftfahrzeuges in kurzer Zeit möglich sein wird. Durch die Verwendung eines Sendeschaltkreises kann das Auffinden weiter vereinfacht werden.

Die Erfindung wird im folgenden anhand der schematischen Zeichnung näher erläutert. Es zeigen:
- Fig. 1: ein Blockdiagramm eines Sicherungssystems für Kraftfahrzeuge,
- Fig. 2: ein Blockdiagramm der Vorrichtung gemäß der Erfindung,
- Fig. 3: ein Blockdiagramm der Vorrichtung gemäß der Erfindung in einer weiteren Ausführungsform,
- Fig. 4: ein Blockdiagramm der Vorrichtung gemäß der Erfindung in einer weiteren Ausführungsform,
- Fig. 5: einen Kurzschlußschaltkreis und
- Fig. 6: im Schnitt ein Gehäuse einer Baueinheit.

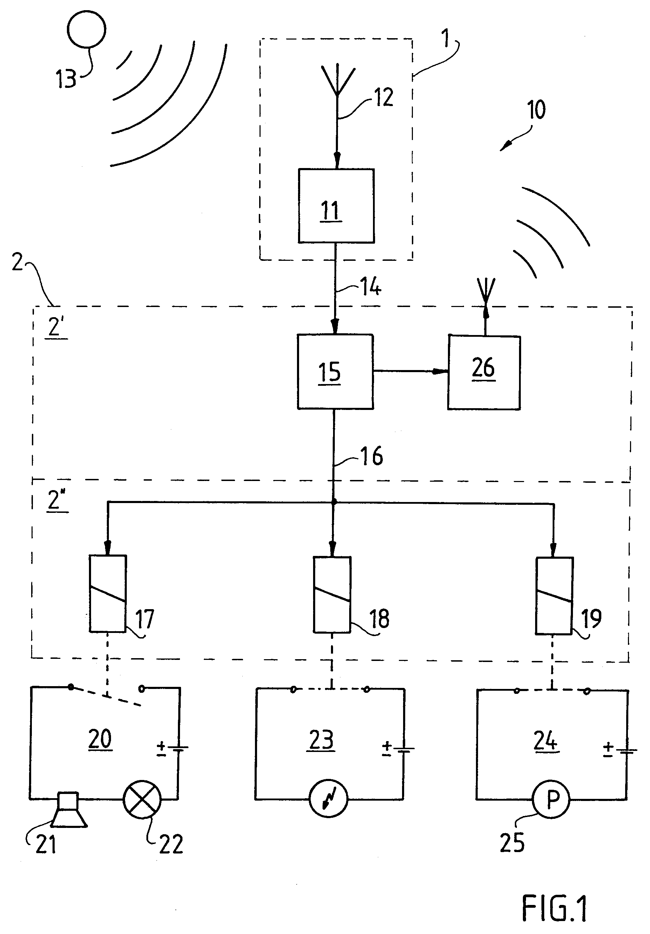

Die in Fig. 1 dargestellte Vorrichtung 10 zum Sichern eines nicht gezeigten Kraftfahrzeuges weist einen Funkempfänger 11 auf, der über eine Antenne 12 ein Funksignal empfangen kann, das über eine Sendeanlage 13 ausgesendet wird. Die Antenne 12 kann dabei als externe Antenne am Kraftfahrzeug montiert oder integrierter Bestandteil des Funkempfängers 11 sein. Auch kann vorgesehen werden, daß die Antenne zumindest aus einem Abschnitt der Drähte der heizbaren Heckscheibe oder Rückspiegel gebildet wird. Auch kann vorgesehen werden, daß als Antenne die ohnehin vorhandene Radioantenne verwendet wird. Die Sendeanlage 13 kann beispielsweise ein Teil eines überregionalen, flächendeckenden Signalübertragungsnetzes sein, wie es beispielsweise für Mobilfunktelefone oder dergleichen Anwendung findet.

Der Funkempfänger 11 erzeugt bei Empfang des entsprechenden Funksignals ein Empfangssignal, das über eine Signalverbindung 14 einem Steuerschaltkreis 15 eingegeben wird. Der Steuerschaltkreis 15 kann beispielsweise als Verstärkungsschaltkreis ausgebildet sein, um wenigstens ein Steuersignal 16 zu erzeugen, durch das wenigstens ein Schaltmittel aktiviert werden kann. Für den Fall, daß das Empfangssignal hinsichtlich seiner Intensität ausreicht, ein Schaltmittel zu aktivieren, kann gegebenfalls auch auf einen Steuerschaltkreis verzichtet werden. Das Empfangssignal wäre dann gleichzeitig das Steuersignal.

Der Steuerschaltkreis 15 steht bei dem dargestellten Ausführungsbeispiel in Verbindung mit drei Schaltmitteln 17, 18, 19, die jeweils in einem Stromkreis des zu sichernden Kraftfahrzeuges angeordnet sind. Im Einzelnen ist die Anordnung so getroffen, daß die Schaltmittel als Relais ausgebildet sind, die durch das Steuersignal 16 geschaltet werden. Bei der Verwendung von zum Beispiel bistabilen Relais verbleiben die Relais 17, 18, 19 auch nach Abbruch des Steuersignals und/oder der Stromversorgung in der aktivierten Lage, bis sie zurückgesetzt werden.

Der Funkempfänger 11 und ggf. die Antenne 12 sind in einer ersten Baueinheit 1 angeordnet, die an einer geeigneten Stelle im Kraftfahrzeug plaziert ist. Zumindest der Steuerschaltkreis 15 ist in einer zweiten Baueinheit 2 angeordnet. Es kann vorgesehen werden, daß zusätzlich die Schaltmittel ebenfalls in dieser Baueinheit angeordnet sind. In diesem Fall umfaßt die zweite Baueinheit die Schaltgruppen 2' und 2'', während im ersteren Fall die zweite Baueinheit nur die Schaltgruppe 2' umfaßt. Im folgenden wird der Einfachheit halber lediglich von der zweiten Baueinheit 2 gesprochen.

Die Baueinheiten 1, 2 sind in der Zeichnung durch gestrichelte Linien angedeutet. Es kann aber auch vorgesehen werden, daß mehrere zweite Baueinheiten vorgesehen sind, die jeweils einen Steuerschaltkreis oder zumindest wenigstens ein Schaltmittel aufweisen. Diese Baueinheiten 2 können dann ebenfalls räumlich unabhängig voneinander im Fahrzeug angeordnet sein und nur mit der ersten Baueinheit 1 in Verbindung stehen.

Die Baueinheiten können jeweils an optimierten Stellen des Kraftfahrzeuges plaziert werden. Die erste Baueinheit mit dem Funkempfänger kann beispielsweise im Fahrgastraum unterhalb der Dachverkleidung, dem Dachhimmel, angeordnet werden. Die zweite Baueinheit kann beispielsweise im Motorraum oder in der Zentralelektrik des Kraftfahrzeuges untergebracht werden. Da die einzelnen Baueinheiten relativ klein bauen, können diese unauffällig montiert werden. Grundsätzlich kann vorgesehen werden, daß zumindest die zweite Baueinheit in Form eines herkömmlichen Relaisgehäuses ausgebildet ist, das auf der Relaisplatine eingesteckt werden kann.

Im folgenden wird die Funktionsweise unabhängig von der Art der Signalverbindung zwischen Funkempfänger und Steuerschaltkreis erläutert. Die Signalverbindung 14 kann beispielsweise als elektrische Signalleitung oder als drahtlose Funkverbindung ausgebildet sein.

Zur Sicherung des Kraftfahrzeuges durch die Schaltmittel 17, 18, 19 ist vorgesehen, daß das Schaltmittel 17 bei seiner Aktivierung einen Stromkreis 20 schließt, durch den das Signalhorn 21 und die Warnblinkanlage 22 betrieben werden. Dabei kann vorgesehen werden, daß das Schaltmittel 17 über einen in der Zeichnung nicht dargestellten Taktgeberschaltkreis periodisch geschaltet wird, um ein intermittierendes und somit auffälligeres Alarmsignal zu erzeugen.

Die Schaltmittel 18 und 19 unterbrechen einen für die Fortbewegung des Kraftfahrzeuges zwingend erforderlichen Stromkreis. Das Schaltmittel 18 öffnet bei seiner Aktivierung durch das Steuersignal 16 den Zündstromkreis 23 des Kraftfahrzeuges. Dies hat zur Folge, daß der Motor zum Stillstand kommt und das Kraftfahrzeug stehen bleibt. Das Schaltmittel 19 unterbricht bei der Aktivierung den Stromkreis 24, durch den die Kraftstoffpumpe 25 des Kraftfahrzeuges angetrieben wird. Der Motor des Kraftfahrzeuges wird hier ebenfalls stillgelegt. Es kann ferner auch vorgesehen werden, daß durch ein weiters, nicht dargestelltes Schaltelement die Kraftstoffzufuhr aktiv durch das Schließen eines Ventils unterbrochen wird. Dadurch kann ein Nachlaufen oder ein Ansaugen des Treibstoffes durch den Motor selbst vermieden werden.

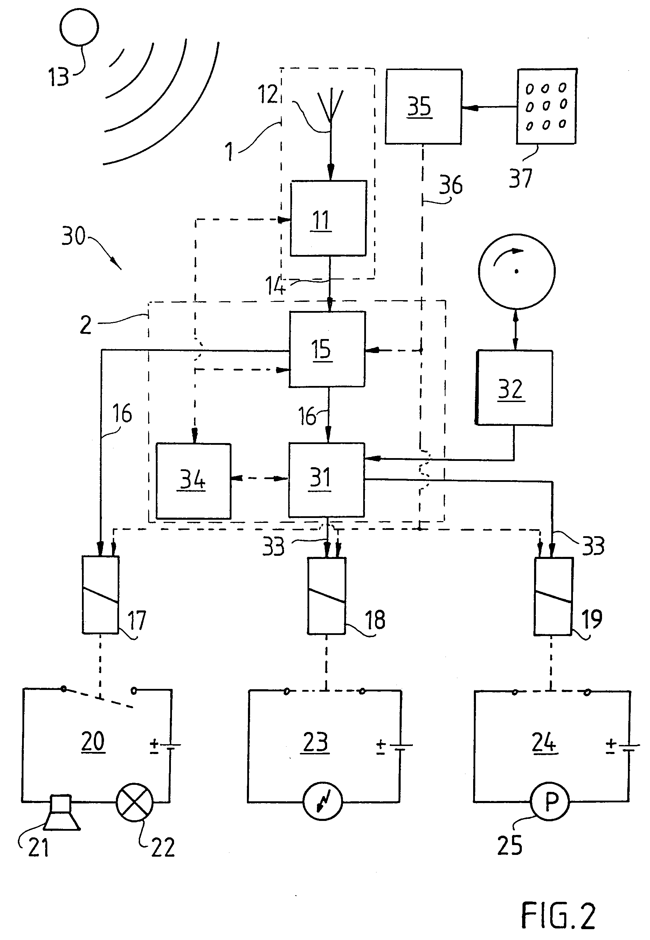

Die in Fig. 2 gezeigte Vorrichtung 10 weist weiterhin einen Sendeschaltkreis 26 auf, der mit dem Steuerschaltkreis in Verbindung steht. Im einzelnen ist die Anordnung so getroffen, daß durch das Steuersignal des Steuerschaltkreises der Sendeschaltkreis eingeschaltet und ein Signal ausgesendet werden kann, das durch entsprechende Empfangsstationen des Signalübertragungsnetzes empfangen werden kann, um das Fahrzeug zu orten.

Die in Fig. 2 dargestellte Vorrichtung 30 entspricht im wesentlichen der Vorrichtung gemäß Fig. 1, und es sind gleiche Elemente mit gleichen Bezugszeichen versehen. Bei der Vorrichtung 30 ist ein Kontrollschaltkreis 31 vorgesehen, der zwischen dem Steuerschaltkreis 15 und den Schaltelementen 18 und 19 zum Unterbrechen eines für die Fortbewegung des Kraftfahrzeuges erforderlichen Schaltkreises 23, 24 angeordnet ist. Der Kontrollschaltkreis 31 steht in Verbindung mit einem Meßfühler 32, der den Stillstand des Kraftfahrzeuges erfaßt. Dabei kann vorgesehen sein, daß der Meßfühler 32 mit dem Geschwindigkeitsgeber des Kraftfahrzeuges, beispielsweise mit der Tachometerwelle oder dem Geschwindigkeitsgeber des Antiblockiersystems, in Verbindung steht, oder als Sensor ausgebildet ist, der die Umdrehung und/oder die Umdrehungsgeschwindigkeit eines Rades erfaßt.

Der Kontrollschaltkreis 31 ist hierbei so ausgelegt, daß er das Steuersignal 16 zum Aktivieren der Unterbrecher 18 und 19 nur dann weiterleitet, wenn daß Kraftfahrzeug vollständig zum Stillstand gekommen ist. Sobald das Kraftfahrzeug zum Stillstand gekommen ist, erzeugt der Kontrollschaltkreis ein Steuersignal 33 zum Aktivieren der Schaltmittel 18 und 19. Das Schaltmittel 17, das ein Alarmsignal einschaltet, wird dabei unmittelbar vom Steuerschaltkreis 15, also beispielsweise auch während der Fahrt, aktiviert. Es ist natürlich auch möglich, daß dieses Schaltmittel 17 ebenfalls über den Kontrollschaltkreis 31 gesteuert wird.

Bei der in Fig. 2 gezeigten Ausführungsform ist ferner ein Speicherschaltkreis 34 vorgesehen, der das Steuersignal und/oder das Empfangssignal speichert, bis die Schaltelemente 17, 18, 19 aktiviert sind. Der Speicherschaltkreis 34 ist dazu mit dem Funkempfänger 11, dem Steuerschaltkreis 15 und dem Kontrollschaltkreis 31 verbunden. Durch das Speichern des Signals wird erreicht, daß bei Unterbrechung des Funksignals und/oder der Stromversorgung dennoch ein Steuersignal erzeugt werden kann, das für die Aktivierung derjenigen Schaltmittel erforderlich ist, die über den Kontrollschaltkreis wegen einer zu hohen Geschwindigkeit des Kraftfahrzeuges zunächst nicht aktiviert worden sind. Unmittelbar bei Stillstand des Kraftfahrzeuges werden dann diese Schaltmittel durch das gespeicherte Signal aktiviert. Das Speichermittel kann dabei in einfacher Weise ebenfalls als bistabiles Relais ausgebildet sein, das bei Aktivierung einen entsprechenden Schaltkreis bis zur Rücksetzung schließt oder öffnet.

Die Schaltmittel können beispielsweise durch einen Rücksetzungsschaltkreis 35 zurückgesetzt werden. Der Rücksetzungsschaltkreis 35 ist der Übersichtlichkeit halber nur in der Fig. 2 gezeigt und kann selbstverständlich bei allen Ausführungsbeispielen vorgesehen werden. Im einzelnen kann die Anordnung so getroffen sein, daß der Rücksetzungsschaltkreis unmittelbar mit den Schaltelementen 17, 18, 19 und/oder mit dem Steuerschaltkreis 15 in Verbindung steht. Der Rücksetzungsschaltkreis erzeugt dabei ein Signal 36, durch den die Schaltmittel in die Ausgangslage geschaltet werden. Das Kraftfahrzeug ist dann wieder betriebsbereit.

Der Rücksetzungsschaltkreis 35 kann beispielsweise einen Mikroschalter aufweisen, der an einem versteckten Ort am Kraftfahrzeug vorgesehen ist. Es ist auch möglich, einen Schlüsselschalter vorzusehen, der durch einen separaten Schlüssel oder durch den Kraftfahrzeugschlüssel betätigbar ist. Ferner kann es zweckmäßig sein, wenn der Rücksetzungsschaltkreis 35 einen Codeschloß-Schalter 37 aufweist, so daß die Rücksetzung nur durch die Eingabe des entsprechenden Codes erfolgen kann. In einer weitergehenden Ausführungsform kann auch vorgesehen werden, daß die Vorrichtung so ausgelegt ist, daß bei Empfang eines erneuten oder eines anderen Funksignals die Schaltmittel zurückgesetzt werden.

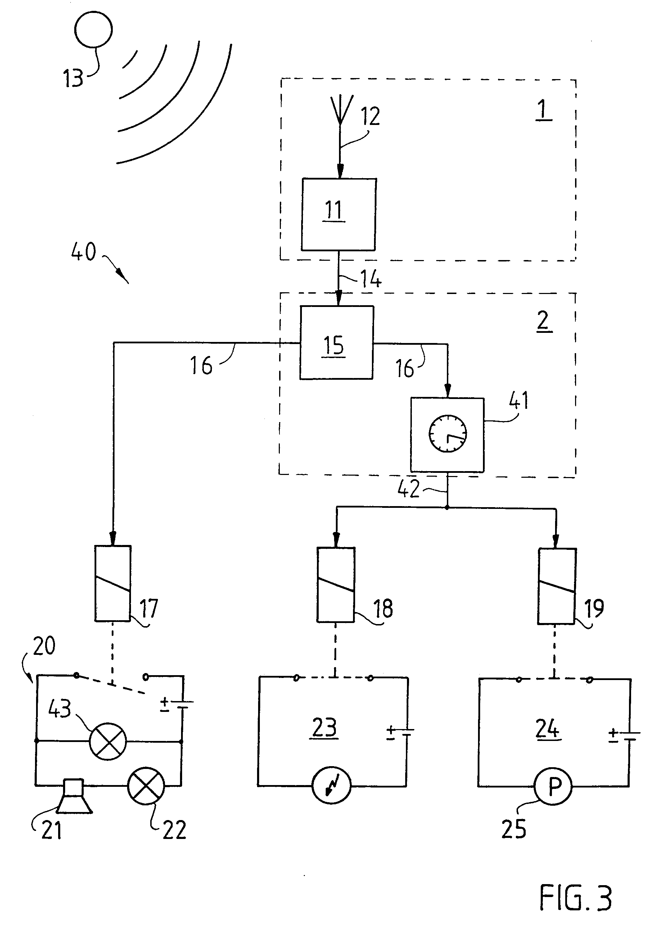

Die in Fig. 3 dargestellte Vorrichtung 40 entspricht im wesentlichen der Vorrichtung gemäß Fig. 1, und es sind gleiche Elemente mit gleichen Bezugszeichen versehen. Bei der Vorrichtung 40 ist zwischen dem Steuerschaltkreis 15 und den Schaltmitteln 18 und 19 zum Unterbrechen eines Stromkreises ein Zeitverzögerungsschaltkreis 41 vorgesehen, der diese Schaltelemente erst nach einer vorgegebenen Zeitspanne aktiviert. Im einzelnen ist die Anordnung so getroffen, daß der Zeitverzögerungsschaltkreis 41 durch das Steuersignal 16 gestartet wird und nach dem Ablauf der Zeitspanne von zum Beispiel 0,5 bis 5 Minuten ein Steuersignal 42 für die Schaltmittel 18 und 19 erzeugt. Das Kraftfahrzeug wird daher erst nach einer bestimmten Zeitdauer stillgelegt, während vorher bereits die optischen und akustischen Alarmsignale durch das Schaltmittel 17 eingeschaltet sind.

Bei dieser Ausführungsform kann es zweckmäßig sein, daß nach der Aktivierung der Vorrichtung beispielsweise durch das Schaltmittel 17 ein weiteres Signalelement 43 eingeschaltet wird, das im Inneren des Kraftfahrzeuges, zum Beispiel in der Armaturentafel, angeordnet ist, um den Fahrer darauf aufmerksam zu machen, daß der Motor des Kraftfahrzeuges angehalten werden wird. Der Fahrer, im allgemeinen der unberechtigte Dritte, kann dann das Kraftfahrzeug anhalten und abstellen, so daß ein durch das Funksignal verursachter Stillstand des Kraftfahrzeuges während der Fahrt und eventuelle Behinderungen des Verkehrs vermieden werden können.

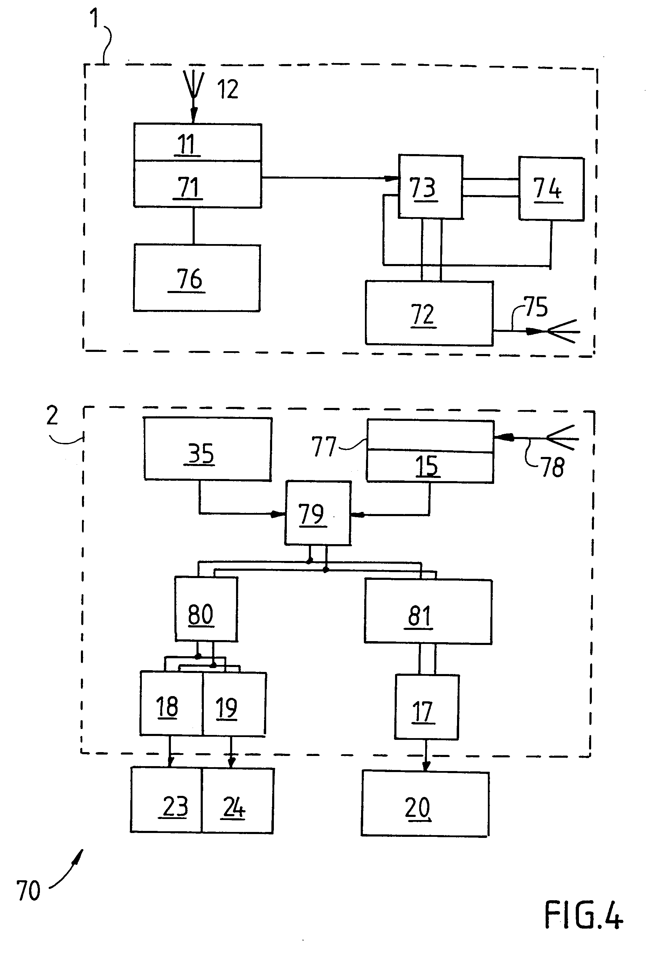

In der Fig. 4 ist eine weitere Vorrichtung 70 gezeigt, bei welcher die Signalverbindung 14 durch eine Funkverbindung realisiert wird. Auch hier sind gleichwirkende Elemente zu den obigen Ausführungsbeispielen mit gleichen Bezugszeichen versehen. In der ersten Baueinheit 1 ist der Funkempfänger 11 angeordnet, der ein kodiertes, ihm zugeordnetes externes Funksignal empfangen kann. Der Funkempfänger ist beispielsweise als sogenannter SCALL-Empfänger ausgebildet. Der Funkempfänger 11 steht in Verbindung mit einer Auswerteeinheit 71, die das kodierte Funksignal detektiert und ein Empfangssignal erzeugt, sofern der entsprechende Code empfangen worden ist.

In der ersten Baueinheit 1 ist ferner ein Sendermodul 72 angeordnet, das einen internen, drahtlosen Sendeimpuls als Antwort auf das Empfangssignal aussenden kann. Im einzelnen ist die Anordnung so getroffen, daß das Empfangssignal ein bistabiles Relais 73 schaltet, daß seinerseits einen Zeitgeberschaltkreis 74 aktiviert, um das Sendermodul nach einer vorgebbaren Zeitdauer von beispielsweise 15 Sekunden einzuschalten. Das Sendermodul 72 kann aber auch direkt geschaltet werden. Das Sendermodul 72 weist eine Sendeantenne 75 auf, die beispielsweise als stabförmiger Strahler, z.B. in Form eines Leiterzuges des Verdrahtungsträgers der vorgenannten Baugruppen, ausgebildet ist.

Die Baugruppen der ersten Baueinheit 1 werden durch einen bordnetzunabhängigen Akkumulator 76 gespeist, der von dem Bordnetz gepuffert sein kann. Diese Stromversorgung ist so ausgebildet, daß ein Entfernen der Baueinheit unmittelbar einen Alarmzustand der zweiten, nachfolgend beschriebenen Baueinheit 2 auslöst.

Die zweite Baueinheit 2 der Ausführungsform gemäß Fig. 4 weist einen Empfängermodul 77 auf, der über eine Antenne 78 in der Lage ist, das von dem Sendermodul 72 ausgestrahlte Funksignal zu empfangen. Die Empfangsantenne 78 kann hier ebenfalls als Leiterzug auf dem entsprechenden Verdrahtungsträger ausgebildet sein. Das Empfängermodul 77 beinhaltet hier den Steuerschaltkreis 15, dessen Ausgang mit dem Eingang eines bistabilen Relais 79 in Verbindung steht. Nach dem Empfang des internen Funksignals wird das Relais 79 geschaltet.

Das Relais 79 steht seinerseits in Verbindung mit den Schaltmitteln 17, 18, 19, die die entsprechenden Warneinrichtungen 20 schalten bzw. die Stromkreise 23, 24 der wesentlichen Betriebssysteme für die Fortbewegung des Kraftfahrzeuges unterbrechen. Es können hierbei noch ein Zeitgeberschaltkreis 80 oder ein Intervallgeber 81 vorgesehen werden, um ein Stillsetzen des Fahrzeuges erst nach einer vorgebbaren Zeit, z. B. 90 Sekunden, bzw. ein periodisches und somit auffälligeres Alarmsignal zu bewirken. Das bistabile Relais 79 steht in Verbindung mit der Rücksetzungseinheit 35, um den Alarmzustand durch den berechtigten Benutzer zurückzusetzen.

Die in den Fig. 1 bis 4 gezeigten Vorrichtungen 10, 30, 40, 70 weisen jeweils unterschiedliche Ausstattungsvarianten, beispielsweise einen Sendeschaltkreis 26, einen Speicherschaltkreis 34, einen Kontrollschaltkreis 31, einen Zeitgeberschaltkreis 41, 74, 81 und einen Rücksetzungsschaltkreis 35 sowie netzunabhängige Stromversorgungen auf. Es ist selbstverständlich, daß die unterschiedlichen Ausstattungen in jeder der Vorrichtung 10, 30, 40, 70 alternativ oder zusätzlich Anwendung finden können. Dies ist jedoch der Übersichtlichkeit halber in den einzelnen Figuren nicht dargestellt. Ferner sind die einzelnen Schaltkreise mit den erforderlichen Bauelementen, wie Transistoren, Verknüpfungsglieder, IC's und dergleichen, nicht näher dargestellt, da die jeweiligen Schaltkreise durch die Funktion für den Fachmann genau und ausreichend definiert sind und daher keiner weiteren Erläuterung bedürfen. Insbesondere ist es natürlich auch möglich, daß die einzelnen Schaltkreise Bestandteile eines einzigen Mikrochips sind, der für diese Funktionen entsprechend ausgebildet ist.

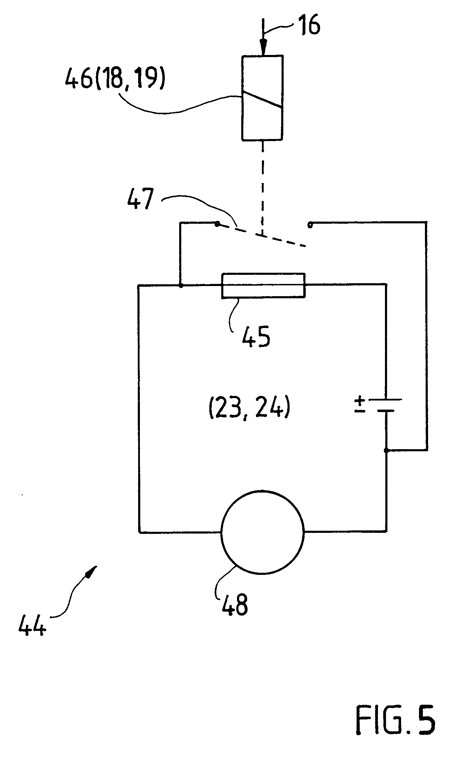

In Fig. 5 ist eine mögliche Ausführungsform eines unterbrechenden Schaltkreises 44 dargestellt, mit dem eine irreversible Unterbrechung eines Stromkreises durch Kurzschließen einer Schmelzsicherung 45 erfolgt. Das Schaltmittel 46 entspricht dem Schaltmittel 18 oder 19 und wird in der gleichen Weise durch ein entsprechendes Steuersignal des Steuerschaltkreises aktiviert. Beim Schließen des Schalters 47 wird ein Kurzschluß über der Schmelzsicherung 45 erzeugt, die daraufhin durchbrennt und den Stromkreis für den elektrischen Verbraucher 48, beispielsweise den Zündstromkreis 23 oder den Stromkreis 24 für die Treibstoffpumpe, unterbricht. Eine Weiterfahrt ist dann nur noch nach einem Ersetzen der Schmelzsicherung 45 möglich.

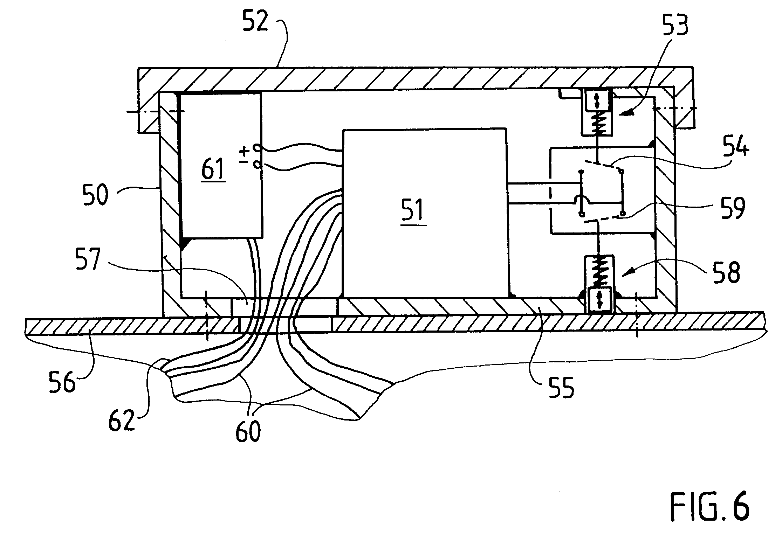

In Fig. 6 ist eine mögliche Ausführungsform eines Gehäuses 50 für eine Baueinheit dargestellt, um die Vorrichtung am Kraftfahrzeug zu installieren. Innerhalb des Gehäuses 50 ist eine Schaltung 51 der Vorrichtung, also beispielsweise die der ersten oder die der zweiten Baueinheit montiert. Das Gehäuse 50 wird durch einen Deckel 52 verschlossen, der beispielsweise mit dem Gehäuse 50 verschraubt ist. Unterhalb des Deckels ist ein Kontaktschalter 53 vorgesehen, der durch das Öffnen des Gehäuses einen Kontakt 54 schließt oder öffnet und die Vorrichtung aktiviert. Die dadurch bewirkte Aktivierung kann dabei einer Aktivierung entsprechen, die durch ein Funksignal ausgelöst worden wäre.

Der Boden 55 des Gehäuses 50, mit dem das Gehäuse an der Karosseriewandung 56 anliegt, kann mit einer Durchbrechung 57 versehen sein, durch die die erforderlichen Leitungen 60 geführt werden. Dies ist insbesondere dann vorteilhaft, wenn die Leitungen innerhalb eines hinter der Karosseriewand 56 vorhandenen Hohlraumes verlaufen, so daß von außen lediglich das Gehäuse 50 sichtbar ist. Ein Abtrennen oder Überbrücken der Leitungen wird daher wesentlich erschwert. Zwischen dem Gehäuse 50 und der Karosseriewandung 56 ist ebenfalls ein Kontaktschalter 58 angeordnet, der beim Lösen des Gehäuses 50 von der Karosseriewand 56 einen elektrischen Kontakt 59 schließt oder öffnet und somit ebenfalls eine Aktivierung des Systems bewirkt.

Grundsätzlich ist es möglich, daß die Vorrichtung 10, 30, 40, 70 über das Bordnetz des Kraftfahrzeuges mit Energie versorgt wird. Es kann auch vorgesehen werden, daß die Vorrichtung oder nur bestimmte Schaltkreise, wie der Funkempfänger, der Steuer- und/oder Speicherschaltkreis, eine unabhängige Stromversorgung 61 aufweisen, die beispielsweise innerhalb des Gehäuses 50 angeordnet ist. Die Stromversorgung 61 kann dabei als einfache Batterie oder als Akkumulator ausgebildet sein, der durch das Bordnetz über die Versorgungsleitungen 62 stets in einem aufgeladenen Zustand gehalten wird. Die unabhängige Stromversorgung ist dabei so dimensioniert, daß auch bei abgeschaltetem Bordnetz zumindest der Funkempfänger betriebsbereit ist und das Funksignal gespeichert werden und/oder die Schaltmittel wenigstens einmal aktiviert werden können. Dies hat zur Folge, daß unmittelbar nach dem Anklemmen der Autobatterie oder dem Einschalten des Bordnetzes die Aktivierung des Systems und die Stillsetzung des Kraftfahrzeuges erfolgt.

Es ist offensichtlich, daß mit der erfindungsgemäßen Vorrichtung ein wirksames Sicherungssystem bereitgestellt werden kann. Es ist für den unbefugten Dritten nämlich nicht ohne weiters ersichtlich, daß das gestohlene Kraftfahrzeug mit einer derartigen Vorrichtung ausgestattet ist, da sich das Kraftfahrzeug anfangs problemlos bewegen läßt. Erst durch die Aktivierung der Vorrichtung durch ein überregionales Funksignal wird das Kraftfahrzeug sichergestellt und stillgesetzt.

## Patentansprüche

1. Vorrichtung zum Stillegen eines unrechtmäßig benutzten Kraftfahrzeuges, insbesondere eines Personenkraftwagens, mit einem Funkempfänger (11) zum Empfangen eines externen, ihm zugeordneten überregionalen und kodierten Funksignals, das von einem im wesentlichen flächendeckenden überregionalen Funksignalübertragungsnetz nach Feststellung der unberechtigten Benutzung durch den rechtmäßigen Eigentümer aussendbar ist, und zum Erzeugen eines Empfangssignals (14), sowie mit wenigstens einem Steuerschaltkreis (15) zum Erzeugen wenigstens eines Steuersignals (16) für wenigstens ein Schaltmittel (18, 19), das wenigstens einen Stromkreis (23, 24) aufgrund des Empfangssignals bzw. des Steuersignals unterbricht, der für die Fortbewegung des Kraftfahrzeuges erforderlich ist, welcher Funkempfänger (11) in einer ersten Baueinheit und welcher Steuerschaltkreis und/oder welches Schaltmittel in wenigstens einer zweiten Baueinheit angeordnet sind, die an jeweils für sich optimierten Stellen räumlich voneinander getrennt in dem Fahrzeug eingebaut sind, wobei wenigstens ein Kontrollschaltkreis (31) vorgesehen ist, der mit wenigstens einem den Stillstand des Kraftfahrzeuges feststellenden Meßfühler (32) verbunden ist, um ein Unterbrechen eines für die Fortbewegung des Kraftfahrzeuges erforderlichen Stromkreises nur bei Stillstand des Kraftfahrzeuges zu bewirken.

2. Vorrichtung nach Anspruch 1, dadurch gekennzeichnet, daß die erste und die zweite Baueinheit über eine Signalleitung miteinander verbunden sind, die innerhalb des Kabelbaums des Kraftfahrzeuges verläuft.

3. Vorrichtung nach Anspruch 2, dadurch gekennzeichnet, daß die Signalleitung eine Leitung eines Stromkreises einer für den Betrieb des Kraftfahrzeuges erforderlichen Betriebseinheit ist, auf die das Empfangssignal zum Schalten des Steuerschaltkreises aufschaltbar ist.

4. Vorrichtung nach Anspruch 1, dadurch gekennzeichnet, daß der Funkempfänger mit einem Sendermodul in Verbindung steht, das in der ersten Baueinheit angeordnet ist und das wenigstens einen internen drahtlos übertragbaren Sendeimpuls in Abhängigkeit von dem Empfang des exteren Funksignals und des daraus resultierenden Empfangssignals erzeugt, und daß in der wenigstens zweiten Baueinheit ein Empfängermodul angeordnet ist, das den interen Sendeimpuls drahtlos empfängt und ein Ausgangssignal erzeugt, um den Steuerschaltkreis zu aktivieren.

5. Vorrichtung nach einem der Ansprüche 1 bis 4, dadurch gekennzeichnet, daß zumindest die erste Baueinheit an einer unzugänglichen Stelle des Fahrzeuges plaziert ist.

6. Vorrichtung nach einem der Ansprüche 1 bis 5, dadurch gekennzeichnet, daß wenigstens ein Zeitgeberschaltkreis (41) vorgesehen ist, um ein Unterbrechen eines für die Fortbewegung des Kraftfahrzeuges erforderlichen Stromkreises erst nach Ablauf einer bestimmten Zeitspanne zu bewirken.

7. Vorrichtung nach einem der Ansprüche 1 bis 6, dadurch gekennzeichnet, daß das Schaltmittel (17) wenigstens eine im Kraftfahrzeuginnenraum wahrnehmbare Signaleinrichtung (43) und einen Zeitgeber (41) startet, um nach Ablauf einer vorbestimmbaren Zeitspanne wenigstens ein Schaltmittel (18, 19) zu aktivieren, das wenigstens einen Stromkreis (23, 24) unterbricht, der für die Fortbewegung des Kraftfahrzeuges erforderlich ist.

8. Vorrichtung nach einem der Ansprüche 1 bis 7, dadurch gekennzeichnet, daß wenigstens ein Speichermittel vorgesehen ist, das das Empfangssignal und/oder das Steuersignal bei einem Spannungsabfall und/oder einer Unterbrechung des Bordnetzes zumindest solange speichert, bis der Spannungsabfall und/oder die Unterbrechung aufgehoben wird, um dann die Schaltmittel zu aktivieren.

9. Vorrichtung nach einem der Ansprüche 1 bis 8, dadurch gekennzeichnet, daß zumindest der Funkempfänger und/oder der Steuerschaltkreis und/oder der Speicherschaltkreis (34) und/oder das Sender- und/oder Empfängermodul eine vom Bordnetz des Kraftfahrzeuges unabhängige Stromversorgung (61) aufweist.

10. Vorrichtung nach einem der Ansprüche 1 bis 9, dadurch gekennzeichnet, daß die entsprechenden Stromversorgungen wenigstens einen Akkumulator aufweisen, der über das Bordnetz gepuffert wird.

11. Vorrichtung nach einem der Ansprüche 1 bis 10, dadurch gekennzeichnet, daß die Schaltmittel (17, 18, 19) als bistabile Relais ausgebildet sind, so daß ein aktivierter Schaltungszustand auch nach einem Spannungsabfall und/oder einer Unterbrechung der Energieversorgung aufrechterhalten bleibt.

12. Vorrichtung nach einem der Ansprüche 1 bis 11, dadurch gekennzeichnet, daß wenigstens ein codiertes und/oder verstecktes Rücksetzungsmittel (35) vorgesehen ist, um die Schaltmittel zurückzusetzen.

13. Vorrichtung nach einem der Ansprüche 1 bis 12, dadurch gekennzeichnet, daß die Schaltmittel (46) zum Unterbrechen eines für die Fortbewegung des Kraftfahrzeuges erforderlichen Stromkreises eine Schmelzsicherung (45) in dem zu unterbrechenden Stromkreis und einen Kurzschlußschalter (47) aufweisen, der durch das Steuersignal aktiviert wird, so daß die Schmelzsicherung durchbrennt.

14. Vorrichtung nach einem der Ansprüche 1 bis 13, dadurch gekennzeichnet, daß die erste und/oder die zweite Baueinheit in einem Gehäuse (50) angeordnet ist, das mit der Karosserie (56) des Kraftfahrzeuges verbunden ist, wobei das Gehäuse wenigstens ein Schaltelement (53, 58) aufweist, das mit der Empfangseinheit und/oder dem Steuerschaltkreis und/oder den Schaltmitteln in Verbindung steht und das durch ein Öffnen des Gehäuses und/oder ein Abmontieren des Gehäuses ausgelöst wird, um ein Empfangsignal bzw. ein Steuersignal auszulösen bzw. die Schaltmittel zu aktivieren.

15. Vorrichtung nach einem der Ansprüche 1 bis 14, dadurch gekennzeichnet, daß wenigstens ein Sendeschaltkreis (26) vorgesehen ist, der mit dem Funkempfänger und/oder dem Steuerschaltkreis in Verbindung steht und der nach Empfang des Funksignals ein externes Funkssignal aussendet.

## Claims

1. Device for immobilizing an unlawfully used motor vehicle, in particular a private car, comprising a radio receiver (11) for receiving an external national and coded radio signal which is assigned to it and which can be transmitted by an essentially full-coverage national radio-signal transmission network after discovery of the unauthorized usage by the lawful owner, and for generating a received signal (14), and also comprising at least one control circuit (15) for generating at least one control signal (16) for at least one switching means (18, 19) which interrupts, on the basis of the received signal or the control signal, at least one electrical circuit (23, 24) which is necessary for the propulsion of the motor vehicle, which radio receiver (11) is disposed in a first unit and which control switching circuit and/or which switching means are disposed in at least one second unit, these being installed in the vehicle in a spatially mutually separated manner at points independently optimized in each case, at least one monitoring circuit (31) being provided which is connected to at least one sensor (32) which detects the stopping of the motor vehicle in order to effect an interruption of an electrical circuit necessary for the propulsion of the motor vehicle only when the motor vehicle is stationary.

2. Device according to Claim 1, characterized in that the first and the second unit are interconnected via a signal line which extends inside the cable harness of the motor vehicle.

3. Device according to Claim 2, characterized in that the signal line is a line of an electrical circuit of an operating unit which is necessary for the operation of the motor vehicle and to which the received signal can be fed for switching the control circuit.

4. Device according to Claim 1, characterized in that the radio receiver is connected to a transmitter module which is disposed in the first unit and which generates the at least one internal wirelessly transmittable transmission pulse as a function of the reception of the external radio signal and the received signal resulting therefrom, and in that there is disposed in the at least second unit a receiver module which receives the internal transmission pulse wirelessly and generates an output signal in order to activate the control circuit.

5. Device according to one of Claims 1 to 4, characterized in that at least the first unit is sited at an inaccessible point in the vehicle.

6. Device according to one of Claims 1 to 5, characterized in that at least one timing circuit (41) is provided in order to effect an interruption of an electrical circuit necessary for the propulsion of the motor vehicle only after the expiry of a certain time period.

7. Device according to one of Claims 1 to 6, characterized in that the switching means (17) starts at least one signal device (43) perceptible in the vehicle passenger compartment and a timer (41) in order to activate after the expiry of a predeterminable time period at least one switching means (18, 19) which interrupts at least one electrical circuit (23, 24) which is necessary for the propulsion of the motor vehicle.

8. Device according to one of Claims 1 to 7, characterized in that at least one storage means is provided which, in the event of a voltage drop and/or an interruption of the vehicle electrical system, stores the received signal and/or the control signal at least until the voltage drop and/or the interruption is eliminated in order then to activate the switching means.

9. Device according to one of Claims 1 to 8, characterized in that at least the radio receiver and/or the control circuit and/or the memory circuit (34) and/or the transmitter module and/or receiver module has a power supply which is independent of the vehicle electrical system of the motor vehicle.

10. Device according to one of Claims 1 to 9, characterized in that the respective power supplies have at least one storage battery which is buffered via the vehicle electrical system.

11. Device according to one of Claims 1 to 10, characterized in that the switching means (17, 18, 19) are designed as bistable relays so that an activated circuit state is maintained even after a voltage drop and/or an interruption of the energy supply.

12. Device according to one of Claims 1 to 11, characterized in that at least one coded and/or hidden reset means (35) is provided in order to reset the switching means.

13. Device according to one of Claims 1 to 12, characterized in that the switching means (46) for interrupting an electrical circuit necessary for the propulsion of the motor vehicle has a blow-out fuse (45) in the electrical circuit to be interrupted and a short-circuiting switch (47) which is activated by the control signal so that the blow-out fuse blows.

14. Device according to one of Claims 1 to 13, characterized in that the first and/or the second unit is disposed in a casing (50) which is joined to the bodywork (56) of the motor vehicle, the casing having at least one switching element (53, 58) which is connected to the receiver and/or the control circuit and/or the switching means and which is triggered by opening the casing and/or dismounting the casing in order to trigger a received signal or a control signal or to activate the switching means.

15. Device according to one of Claims 1 to 14, characterized in that at least one transmission circuit (26) is provided which is connected to the radio receiver and/or the control circuit and which transmits an external radio signal after receiving the radio signal.

## Revendications

1. Dispositif pour arrêter un véhicule automobile utilisé de manière non autorisée, notamment d'un véhicule de tourisme comprenant un récepteur radio (11) pour recevoir un signal radio externe qui lui est attribué, de manière interrégional et codé, ce signal étant émis par un réseau de transmission de signaux radio, interrégionaux, à couverture de surface, après constatation de l'utilisation non autorisée par le propriétaire en droit, et pour générer un signal de réception (14) ainsi qu'au moins un circuit de commande (15) pour générer au moins un signal de commande (16) pour au moins un moyen de commutation (18, 19) qui, du fait du signal de réception du signal de commande, interrompt un circuit électrique (23, 24) indispensable pour le déplacement du véhicule, ce récepteur radio (11) étant prévu dans un premier ensemble et le circuit de commande et/ou des moyens de commutation étant prévus au moins dans un second ensemble qui sont situés à des endroits optimisés, distants dans l'espace à l'intérieur du véhicule, et au moins un circuit de contrôle (31) est relié à au moins un capteur de mesure (32) constatant l'arrêt du véhicule automobile, pour interrompre un circuit électrique nécessaire au mouvement du véhicule seulement à l'arrêt du véhicule.

2. Dispositif selon la revendication 1,
caractérisé en ce que
le premier et le second ensemble sont reliés par une ligne de transmission de signaux qui passe dans le faisceau de câble du véhicule.

3. Dispositif selon la revendication 2,
caractérisé en ce que
la ligne de signaux est une ligne d'un circuit électrique d'une unité de fonctionnement indispensable au fonctionnement du véhicule automobile, et sur lequel les signaux de réception sont appliqués pour commuter le circuit de commutation de commande.

4. Dispositif selon la revendication 1,
caractérisé en ce que
- le récepteur radio peut être relié à un module d'émission prévu dans le premier ensemble et au moins une impulsion d'émission à transmission sans fil interne est prévue en fonction de la réception du signal radio externe et du signal de réception qui en résulte, et
- dans au moins le second ensemble, il est prévu un module de réception qui reçoit sans fil l'impulsion d'émission interne et génère un signal de sortie pour activer le circuit de commande.

5. Dispositif selon l'une des revendications 1 à 4,
caractérisé en ce qu'
au moins un premier ensemble est placé à un emplacement inaccessible du véhicule.

6. Dispositif selon l'une des revendications 1 à 5,
caractérisé en ce qu'
au moins un circuit d'horloge (41) est prévu pour assurer la coupure d'un circuit électrique nécessaire au mouvement du véhicule, seulement à la fin d'un intervalle de temps prédéterminé.

7. Dispositif selon l'une des revendications 1 à 6,
caractérisé en ce que
le moyen de commutation (17) démarre au moins une installation de signal (43) perceptible à l'intérieur de l'habitacle du véhicule et une horloge (41) et à la fin d'un intervalle de temps prédéterminé correspondant au moins à un moyen de commutation (18, 19) il est activé pour qu'au moins un circuit électrique (23, 24) soit interrompu, ce qui est nécessaire pour le mouvement d'avancée du véhicule.

8. Dispositif selon l'une des revendications 1 à 7,
caractérisé en ce qu'
il comporte au moins une mémoire enregistrant le signal de réception et/ou le signal de commande en cas de chute de tension et/ou d'interruption du réseau embarqué, au moins jusqu'à ce que la chute de tension et/ou la coupure soit éliminée, pour activer alors les moyens de commutation.

9. Dispositif selon l'une des revendications 1 à 8,
caractérisé par
au moins un récepteur radio et/ou un circuit de commande et/ou un circuit de mémoire (34) et/ou le module d'émission et/ou de réception comporte une alimentation électrique (61) indépendante du réseau embarqué du véhicule automobile.

10. Dispositif selon l'une quelconque des revendications 1 à 9,
caractérisé en ce que
les alimentations électriques correspondantes comprennent au moins un accumulateur tamponné par l'intermédiaire du réseau embarqué.

11. Dispositif selon l'une quelconque des revendications 1 à 10,
caractérisé en ce que
les moyens de commutation (17, 18, 19) sont des relais bistables et un état de circuit d'activation reste maintenu même après la chute de tension et/ou coupure de l'alimentation électrique.

12. Dispositif selon l'une quelconque des revendications 1 à 11,
caractérisé par
au moins un moyen de remise à l'état initial (35), codé et/ou caché, pour remettre à l'état initial les moyens de commutation.

13. Dispositif selon l'une quelconque des revendications 1 à 12,
caractérisé en ce que
les moyens de commutation (46) comportent pour interrompre un circuit électrique nécessaire au mouvement du véhicule, un fusible (45) qui, pour interrompre le circuit électrique et un interrupteur de court-circuit (47), qui est alors activé par le signal de commande, est actionné pour que le fusible brûle.

14. Dispositif selon l'une quelconque des revendications 1 à 13,
caractérisé en ce que
le premier et/ou le second ensemble sont logés dans un boîtier (50) relié à la carrosserie (56) du véhicule et le boîtier comporte au moins un élément de commutation (53, 58) relié à l'unité de réception et/ou au circuit de commande et/ou aux moyens de commutation et par l'ouverture du boîtier et/ou le démontage du boîtier il est déclenché pour activer un signal de réception ou un signal de commande ou activer le moyen de commutation.

15. Dispositif selon l'une quelconque des revendications 1 à 14,
caractérisé par
au moins un circuit d'émission (26) relié au récepteur radio et/ou au circuit de commande et qui génère un signal radio externe après la réception du signal radio.
